# EUROPEAN PATENT SPECIFICATION

(11) **EP 3 994 225 B1**
(45) Date of publication and mention of the grant of the patent: **06.03.2024**
(21) Application number: 19935967.0
(22) Date of filing: 03.07.2019
(51) Int. Cl.: C09J 7/38, C09J 183/07, C09J 183/06, C09J 183/05, C09J 183/00, C09J 183/04

(54) **SILICONE PRESSURE SENSITIVE ADHESIVE COMPOSITION CONTAINING A FLUOROSILICONE ADDITIVE AND METHODS FOR THE PREPARATION AND USE THEREOF**
DRUCKEMPFINDLICHE SILIKONKLEBSTOFFZUSAMMENSETZUNG, DIE EIN FLUORSILIKONADDITIV ENTHÄLT, SOWIE IHR HERSTELLUNGS- UND VERWNDUNGSVERFAHREN
COMPOSITION ADHÉSIVE SENSIBLE À LA PRESSION À BASE DE SILICONE CONTENANT UN ADDITIF DE FLUOROSILICONE ET SES PROCÉDÉS DE PRÉPARATION ET D'UTILISATION

(43) Date of publication of application: 11.05.2022
(73) Proprietor: Dow Silicones Corporation, Midland, MI 48686-0994 (US)
(72) Inventor: JIANG, Jingui, Shanghai 201203 (CN); LIU, Zhihua, Shanghai 201203 (CN); HUANG, Fuming, Shanghai 201203 (CN); LU, Ruihua, Shanghai 201203 (CN); ZHU, Chengrong, Shanghai 201203 (CN); ZHU, Jiayin, Shanghai 201203 (CN)
(74) Representative: Murgitroyd & Company
(86) International application number: PCT/CN2019/094506
(87) International publication number: WO 2021/000280

(56) References cited:
- US-A1- 2011 251 339
- US-A1- 2015 240 141
- US-B2- 7 521 124

## Description

### CROSS REFERENCE TO RELATED APPLICATIONS

None.

### TECHNICAL FIELD

A silicone pressure sensitive adhesive composition can be cured on a substrate to form a protective film. The protective film is useful in electronics applications for protection of display glass having an anti-fingerprint coating on its surface (AF glass).

### BACKGROUND

Display devices let users access information easily, however, they suffer from the drawback of accumulating fingerprints and other materials that can damage the display or make the display difficult to see. The use of AF glass has been proposed to address these issues.

Conventional silicone pressure sensitive adhesives may lack sufficient adhesion on AF glass. If an adhesion promoting additive is included in the silicone pressure sensitive adhesive composition, the resulting silicone pressure sensitive adhesive may then have adhesion that is too high on certain substrates to allow effective processing to fabricate the display device. US2015/240141 A1 discloses a composition based on a polyorganosiloxane with at least two alkenyl groups per molecule, a polyorganosiloxane with M and Q units, a polyorganohydrogensiloxane with at least three SiH groups per molecule, and an oligomer comprising aryl and tetrasiloxane units. The composition can be deployed in anti-fingerprint applications. SUMMARY

A silicone pressure sensitive adhesive (Si-PSA) composition and method for its preparation are disclosed. The Si-PSA composition is curable to form a Si-PSA suitable for use in protective films for display devices. A protective film comprising the Si-PSA on a surface of a substrate may be used on AF glass.

### BRIEF DESCRIPTION OF THE DRAWINGS

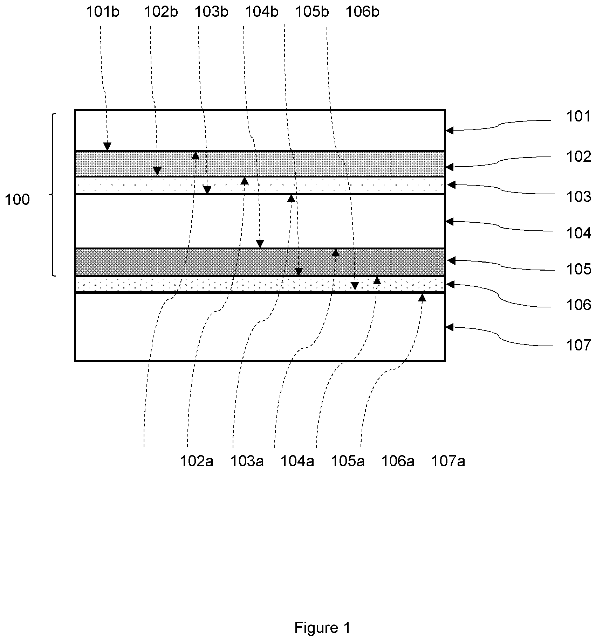

Figure 1 shows a partial cross section of a protective film 100.

### Reference Numerals

| | | | |
|---|---|---|---|
| 100 | protective film | 103a | surface of anti-fingerprint hard coating 103 |
| 101 | polymeric substrate | | |
| 101b | surface of polymeric substrate 101 | 103b | opposing surface of anti-fingerprint hard coating 103 |
| 102 | second Si-PSA | | |
| 102a | surface of second Si-PSA 102 | 104 | substrate |
| 102b | opposing surface of Si-PSA 102 | 104a | surface of substrate 104 |
| 103 | anti-fingerprint hard coating | 104b | opposing surface of substrate 104 |
| 105 | Si-PSA | 106b | opposing surface of anti-fingerprint coating 106 |
| 105a | surface of Si-PSA 105 | | |
| 105b | opposing surface of Si-PSA 105 | 107 | display cover glass |
| 106 | anti-fingerprint coating | 107a | surface of display cover glass 107 |
| 106a | surface of anti-fingerprint coating | | |
| 106 | | | |

### DETAILED DESCRIPTION

The Si-PSA composition comprises: (A) a polydialkylsiloxane terminated with an aliphatically unsaturated group; (B) a polyalkylhydrogensiloxane; (C) a hydrosilylation reaction catalyst; (D) a siloxane selected from the group consisting of (D-1) a polyorganosilicate resin, (D-2) a branched polyorganosiloxane polymer, and (D-3) a combination of both (D-1) and (D-2); (E) a poly(dialkyl/alkyl,fluoroalkyl)siloxane; (F) an anchorage additive; optionally (G) a hydrosilylation reaction inhibitor; and optionally (H) a solvent.

### Starting Material (A) Polydialkylsiloxane

Starting material (A) in the Si-PSA composition is a polydialkylsiloxane terminated with an aliphatically unsaturated group. The polydialkylsiloxane may have unit formula (A-1): (R^{M}₂R^{U}SiO_{1/2})₂(R^{M}₂SiO_{2/2})ₐ, where each R^{M} is an independently selected alkyl group of 1 to 30 carbon atoms that is free of aliphatic unsaturation; each R^{U} is an independently selected monovalent aliphatically unsaturated hydrocarbon group of 2 to 30 carbon atoms; and subscript a has a value of 4 to 10,000, alternatively the average value of subscript a may be 600 to 10,000.

Each R^{M} is an independently selected alkyl group of 1 to 30 carbon atoms. Alternatively, each R^{M} may have 1 to 12 carbon atoms, and alternatively 1 to 6 carbon atoms. "Alkyl" means a cyclic, branched, or unbranched, saturated monovalent hydrocarbon group. Suitable alkyl groups for R^{M} are exemplified by linear and branched alkyl groups such as methyl, ethyl, propyl (e.g., iso-propyl and/or n-propyl), butyl (e.g., isobutyl, n-butyl, tert-butyl, and/or sec-butyl), pentyl (e.g., isopentyl, neopentyl, and/or tert-pentyl), hexyl, heptyl, octyl, nonyl, and decyl, and branched alkyl groups of 6 or more carbon atoms; or cyclic alkyl groups such as cyclopentyl and cyclohexyl. Alternatively, each R^{M} may be independently selected from the group consisting of linear alkyl and branched alkyl. Alternatively, each R^{M} may be linear alkyl. Alternatively, each R^{M} may be methyl.

In unit formula (A-1), each R^{U} is an independently selected monovalent aliphatically unsaturated hydrocarbon group of 2 to 30 carbon atoms. Alternatively, each R^{U} may have 2 to 12 carbon atoms, and alternatively 2 to 6 carbon atoms. Suitable monovalent aliphatically unsaturated hydrocarbon groups include alkenyl groups and alkynyl groups. "Alkenyl" means a cyclic, branched or unbranched, monovalent hydrocarbon group having one or more carbon-carbon double bonds. Suitable alkenyl groups are exemplified by vinyl; allyl; propenyl (e.g., isopropenyl, and/or n-propenyl); and butenyl, pentenyl, hexenyl, and heptenyl, (including branched and linear isomers of 4 to 7 carbon atoms); and cyclohexenyl. "Alkynyl" means a cyclic, branched or unbranched, monovalent hydrocarbon group having one or more carbon-carbon triple bonds. Suitable alkynyl groups are exemplified by ethynyl, propynyl, and butynyl (including branched and linear isomers of 2 to 4 carbon atoms). Alternatively, each R^{U} may be linear alkenyl, such as vinyl, allyl, or hexenyl.

Starting material (A) may comprise a polydialkylsiloxane such as
A-2) bis-dimethylvinylsiloxy-terminated polydimethylsiloxane,
A-3) bis-dimethylhexenylsiloxy-terminated polydimethylsiloxane,
A-4) a combination of two or more of A-2), A-3), and A-4). Methods of preparing polydialkylsiloxanes suitable for use in the Si-PSA composition, such as hydrolysis and condensation of the corresponding alkylhalosilanes or equilibration of cyclic polydialkylsiloxanes, are well known in the art.

The amount of polydialkylsiloxane in the Si-PSA composition is 10% to 60%, based on combined weights of starting materials (A) to (G) (e.g., based on combined weights of all starting materials in the Si-PSA composition excluding solvent). Alternatively, the amount of polydialkylsiloxane in the Si-PSA composition may be 20% to 35%, and alternatively 25% to 30%, on the same basis.

### Starting Material (B) Polyalkylhydrogensiloxane

Starting material (B) in the Si-PSA composition is a polyalkylhydrogensiloxane that may act as a crosslinker. The polyalkylhydrogensiloxane may have unit formula (B-1): (R^{M}₃SiO_{1/2})ᵣ(R^{M}₂HSiO_{1/2})ₛ(R^{M}₂SiO_{2/2})ₜ(R^{M}HSiO_{2/2})ᵤ, where R^{M} is as described above; subscript r is 0, 1, or 2; subscript s is 0, 1, or 2, with the proviso that a quantity (r + s) = 2; subscript t ≥ 0, subscript u > 0, with the proviso that a quantity (s + u) > 2, and a quantity (r + s + t + u) is 4 to 500.

Suitable polyalkylhydrogensiloxanes are exemplified by:
(B-2) bis-dimethylhydrogensiloxy-terminated polydimethylsiloxane,
(B-3) bis-dimethylhydrogensiloxy-terminated poly(dimethyl/methylhydrogen)siloxane,
(B-4) bis-dimethylhydrogensiloxy-terminated polymethylhydrogensiloxane,
(B-5) bis-trimethylsiloxy-terminated poly(dimethyl/methylhydrogen)siloxane,
(B-6) bis-trimethylsiloxy-terminated polymethylhydrogensiloxane, and
(B-7) a combination of two or more of (B-2), (B-3), (B-4), (B-5), and (B-6). Methods of preparing polyalkylhydrogensiloxanes, such as hydrolysis and condensation of alkylhydridohalosilanes, are well known in the art.

The amount of polyalkylhydrogensiloxane in the Si-PSA composition is 0.1% to 5%, based on combined weights of starting materials (A) to (G) (e.g., based on combined weights of all starting materials in the Si-PSA composition excluding solvent). Alternatively, the amount of polyalkylhydrogensiloxane in the Si-PSA composition may be 0.5% to 2.5%, and alternatively 1% to 2%, on the same basis.

### Starting Material (C) Hydrosilylation Reaction Catalyst

Hydrosilylation reaction catalysts are known in the art and are commercially available. Hydrosilylation reaction catalysts include platinum group metal catalysts. Such hydrosilylation reaction catalysts can be (C-1) a metal selected from platinum, rhodium, ruthenium, palladium, osmium, and iridium. Alternatively, the hydrosilylation reaction catalyst may be (C-2) a compound of such a metal, for example, chloridotris(triphenylphosphane)rhodium(I) (Wilkinson's Catalyst), a rhodium diphosphine chelate such as [1,2-bis(diphenylphosphino)ethane]dichlorodirhodium or [1,2-bis(diethylphospino)ethane]dichlorodirhodium, chloroplatinic acid (Speier's Catalyst), chloroplatinic acid hexahydrate, platinum dichloride. Alternatively, the hydrosilylation reaction catalyst may be (C-3) a complex of the platinum group metal compound with a low molecular weight organopolysiloxane, or (C-4) the platinum group metal compound microencapsulated in a matrix or coreshell type structure. Complexes of platinum with low molecular weight organopolysiloxanes include 1,3-diethenyl-1,1,3,3-tetramethyldisiloxane complexes with platinum (Karstedt's Catalyst). Alternatively, the hydrosilylation catalyst may comprise (C-5) the complex microencapsulated in a resin matrix. Exemplary hydrosilylation reaction catalysts are described in U.S. Patents 3,159,601; 3,220,972; 3,296,291; 3,419,593; 3,516,946; 3,814,730; 3,989,668; 4,784,879; 5,036,117; and 5,175,325; and EP 0 347 895 B. Microencapsulated hydrosilylation reaction catalysts and methods of preparing them are known in the art, as exemplified in U.S. Patents 4,766,176 and 5,017,654. Hydrosilylation reaction catalysts are commercially available, for example, SYL-OFF^{™} 4000 Catalyst and SYL-OFF^{™} 2700 are available from Dow Silicones Corporation of Midland, Michigan, USA.

The amount of hydrosilylation reaction catalyst used herein will depend on various factors including the selection of starting materials (B) and (A), and their respective contents of silicon bonded hydrogen atoms (SiH) and aliphatically unsaturated groups and the content of the platinum group metal in the catalyst selected, however, the amount of hydrosilylation reaction catalyst is sufficient to catalyze hydrosilylation reaction of SiH and aliphatically unsaturated groups, alternatively the amount of catalyst is sufficient to provide 1 ppm to 6,000 ppm of the platinum group metal based on combined weights of starting materials containing silicon bonded hydrogen atoms and aliphatically unsaturated hydrocarbon groups; alternatively 1 ppm to 1,000 ppm, and alternatively 1 ppm to 100 ppm, on the same basis. Alternatively, the amount of catalyst may be 0.01% to 5% based on combined weights of starting materials (A) to (G), (e.g., based on combined weights of all starting materials in the Si-PSA composition, excluding solvent). Alternatively, when the hydrosilylation reaction catalyst comprises a platinum - organosiloxane complex, the amount of catalyst may be 1% to 5%, alternatively 2% to 4%, based on combined weights of starting materials (A) to (G) (e.g., based on combined weights of all starting materials in the Si-PSA composition excluding solvent).

The Si-PSA composition described herein further comprises starting material (D), a siloxane selected from the group consisting of (D-1) a polyorganosilicate resin, (D-2) a branched polyorganosiloxane polymer, and (D-3) a combination of both (D-1) and (D-2).

### Starting Material (D1) Polyorganosilicate Resin

Starting material (D-1) in the Si-PSA composition described herein is a polyorganosilicate resin. The polyorganosilicate resin comprises monofunctional units ("M" units) of formula R^{P}₃SiO_{1/2} and tetrafunctional silicate units ("Q" units) of formula SiO_{4/2}, where R^{P} is selected from the group consisting of R^{M} and R^{U}, each of which are described above. Alternatively, in the polyorganosilicate resin, each R^{P} may be R^{M}, alternatively each R^{P} may be alkyl, and alternatively methyl. Alternatively, each R^{P} may be selected from linear alkyl and linear alkenyl, alternatively methyl and vinyl. Alternatively, at least one-third, alternatively at least two thirds of the R^{P} groups are methyl groups. Alternatively, the M units may be exemplified by (Me₃SiO_{1/2}) and (Me₂ViSiO_{1/2}). The polyorganosilicate resin is soluble in solvents such as those described below, exemplified by liquid hydrocarbons, such as benzene, toluene, xylene, and heptane, or in liquid organosilicon compounds such as low viscosity linear and cyclic polydiorganosiloxanes.

When prepared, the polyorganosilicate resin comprises the M and Q units described above, and the polyorganosiloxane further comprises units with silicon bonded hydroxyl groups and may comprise neopentamer of formula Si(OSiR^{P}₃)₄, where R^{P} is as described above, e.g., the neopentamer may be tetrakis(trimethylsiloxy)silane. ²⁹Si NMR spectroscopy may be used to measure hydroxyl content and molar ratio of M and Q units, where said ratio is expressed as {M(resin)}/{Q(resin)}, excluding M and Q units from the neopentamer. M:Q ratio represents the molar ratio of the total number of triorganosiloxy groups (M units) of the resinous portion of the polyorganosilicate resin to the total number of silicate groups (Q units) in the resinous portion. M:Q ratio may be 0.5:1 to 1.5:1.

The Mn of the polyorganosilicate resin depends on various factors including the types of hydrocarbon groups represented by R^{M} that are present. The Mn of the polyorganosilicate resin refers to the number average molecular weight measured using GPC, when the peak representing the neopentamer is excluded from the measurement. The Mn of the polyorganosilicate resin may be greater than 3,000 g/mol, alternatively > 3,000 g/mol to 8,000 g/mol. Alternatively, Mn of the polyorganosilicate resin may be 3,500 g/mol to 8,000 g/mol.

U.S. Patent 8,580,073 at col. 3, line 5 to col. 4, line 31, and U.S. Patent Publication 2016/0376482 at paragraphs [0023] to [0026] are hereby incorporated by reference for disclosing MQ resins, which are suitable polyorganosilicate resins for use in the pressure sensitive adhesive composition described herein. The polyorganosilicate resin can be prepared by any suitable method, such as cohydrolysis of the corresponding silanes or by silica hydrosol capping methods. The polyorganosilicate resin may be prepared by silica hydrosol capping processes such as those disclosed in U.S. Patent 2,676,182 to Daudt, et al.; U.S. Patent 4,611,042 to Rivers-Farrell et al.; and U.S. Patent 4,774,310 to Butler, et al. The method of Daudt, et al. described above involves reacting a silica hydrosol under acidic conditions with a hydrolyzable triorganosilane such as trimethylchlorosilane, a siloxane such as hexamethyldisiloxane, or mixtures thereof, and recovering a copolymer having M units and Q units. The resulting copolymers generally contain from 2 to 5 percent by weight of hydroxyl groups.

The intermediates used to prepare the polyorganosilicate resin may be triorganosilanes and silanes with four hydrolyzable substituents or alkali metal silicates. The triorganosilanes may have formula R^{P}₃SiX¹, where R^{M} is as described above and X¹ represents a hydrolyzable substituent such as halogen, alkoxy, acyloxy, hydroxyl, oximo, or ketoximo; alternatively, halogen, alkoxy or hydroxyl. Silanes with four hydrolyzable substituents may have formula SiX²₄, where each X² is halogen, alkoxy or hydroxyl. Suitable alkali metal silicates include sodium silicate.

The polyorganosilicate resin prepared as described above typically contains silicon bonded hydroxyl groups, i.e., of formulae, HOSi_{3/2} and/or HOR^{P}₂SiO_{1/2}. The polyorganosilicate resin may comprise up to 2% of silicon bonded hydroxyl groups, as measured by FTIR spectroscopy. For certain applications, it may desirable for the amount of silicon bonded hydroxyl groups to be below 0.7%, alternatively below 0.3%, alternatively less than 1%, and alternatively 0.3% to 0.8%. Silicon bonded hydroxyl groups formed during preparation of the polyorganosilicate resin can be converted to trihydrocarbon siloxane groups or to a different hydrolyzable group by reacting the silicone resin with a silane, disiloxane, or disilazane containing the appropriate terminal group. Silanes containing hydrolyzable groups may be added in molar excess of the quantity required to react with the silicon bonded hydroxyl groups on the polyorganosilicate resin.

Alternatively, the polyorganosilicate resin may further comprise 2% or less, alternatively 0.7% or less, and alternatively 0.3% or less, and alternatively 0.3% to 0.8% of units represented by formula XSiO_{3/2} and/or XR^{P}₂SiO_{1/2} where R^{P} is as described above, and X represents a hydrolyzable substituent, as described above for X¹ .

Alternatively, the polyorganosilicate resin may have terminal aliphatically unsaturated groups. The polyorganosilicate resin having terminal aliphatically unsaturated groups may be prepared by reacting the product of Daudt, *et al.* with an unsaturated organic group-containing endblocking agent and an endblocking agent free of aliphatic unsaturation, in an amount sufficient to provide from 3 to 30 mole percent of unsaturated organic groups in the final product. Examples of endblocking agents include, but are not limited to, silazanes, siloxanes, and silanes. Suitable endblocking agents are known in the art and exemplified in U.S. Patents 4,584,355; 4,591,622; and 4,585,836. A single endblocking agent or a mixture of such agents may be used to prepare such resin.

Alternatively, the polyorganosilicate resin may comprise unit formula (D-1-1): (R^{M}₃SiO-_{1/2})ₘ(R^{M}₂R^{U}SiO-_{1/2})ₙ(SiO_{4/2})ₒ, where R^{M} and R^{U} are as described above and subscripts m, n and o have average values such that m ≥ 0, n ≥ 0, o > 1, and (m + n) > 4. Alternatively, the polyorganosilicate resin may comprise unit formula (D-1-2): (R^{M}₃SiO-_{1/2})_{z}(SiO_{4/2})ₒ, where R^{M} is as described above, subscript o is as described above, and subscript z > 4.

The exact amount of polyorganosilicate resin depends on various factors including the types and amounts of other starting materials in the Si-PSA composition, the concentration of aliphatically unsaturated groups and silicon bonded hydrogen atoms of the other starting materials in the Si-PSA composition, and whether an inhibitor is present. However, starting materials (A) and (D) may be present in amounts sufficient to provide a weight ratio of amount of starting material (D) to starting materials (A) (Resin/Polymer), or (D)/(A) ratio) of ≥ 2/1, alternatively ≥ 2/1 to 3.5/1; alternatively ≥ 2/1 to 3/1, alternatively ≥ 2/1 to 2.5/1, and alternatively 2.3/1. Alternatively, the polyorganosilicate resin may be present in an amount of 4% to 74%, alternatively 50% to 70%, alternatively 55% to 65%, based on combined weights of starting materials (A) to (G) in the Si-PSA composition (e.g., based on combined weights of all starting materials in the Si-PSA composition excluding solvent).

### Starting Material (D2) Branched Polvoraanosiloxane Polymer

The Si-PSA composition described herein may further comprise starting material (D2), a branched polyorganosiloxane in addition to, or instead of, the polyorganosilicate resin. The branched polyorganosiloxane may comprise a Q branched polyorganosiloxane of unit formula (D-2-1): (R^{M}₃SiO_{1/2})_{b}(R^{M}₂R^{U}SiO_{1/2})_{c}(R^{M}₂SiO_{2/2})_{d}(SiO_{4/2})ₑ, where R^{M} and R^{U} are as described above, and subscripts b, c, d, and e have the following values b ≥ 0, c ≥ 0, a quantity (b + c) ≥ 4, d is 0 to 995, and e ≥ 1. Alternatively, the subscripts may have average values such that 2 ≥ b ≥ 0, 4 ≥ c ≥ 0, 150 ≥ d ≥ 0, e = 1, the quantity (b + c) = 4, and a quantity (b + c+ d + e) has a value sufficient to impart to the branched polyorganosiloxane a viscosity > 170 mPa s measured by rotational viscometry (at 25°C at 0.1 RPM to 50 RPM on a Brookfield DV-III cone & plate viscometer with #52 spindle). Alternatively, viscosity may be > 170 mPa s to 1,000 mPa s, alternatively > 170 to 500 mPa s, alternatively 180 mPa s to 450 mPa s, and alternatively 190 mPa s to 420 mPa s. Suitable branched siloxanes for starting material (D-2) are exemplified by those disclosed in U.S. Patent 6,806,339 and U.S. Patent Publication 2007/0289495.

Alternatively, starting material (D2) may comprise formula (D-2-2): [R^{U}R^{M}Si-(O-SiR^{M}₂)ₓ-O]_{y}-Si-[O-(R^{M}₂SiO)ᵥSiR^{M}₃]_{w}, where each R^{M} in this formula (D-2-2) is an alkyl group of 1 to 6 carbon atoms, and each R^{U} in this formula (D-2-2) is an alkenyl group of 2 to 6 carbon atoms; and subscripts v, w, x, and y have values such that 200 ≥ v ≥ 1, 2 ≥ w ≥ 0, 200 ≥ x ≥ 1, 4 ≥ y ≥ 0, and a quantity (w + y) = 4. Alternatively, in this formula (D-2-2), each R^{M} is methyl, and each R^{U} is independently selected from the group consisting of vinyl, allyl, and hexenyl. Branched polyorganosiloxane suitable for use in the Si-PSA composition may be prepared by known methods such as heating a mixture comprising a polyorganosilicate resin, and a cyclic polydiorganosiloxane or a linear polydiorganosiloxane, in the presence of a catalyst, such as an acid or phosphazene base, and thereafter neutralizing the catalyst.

The amount of starting material (D2) depends on various factors including the type and amount of other starting materials in the Si-PSA composition, the concentration of aliphatically unsaturated groups and silicon bonded hydrogen atoms of the starting materials in the Si-PSA composition, and whether an inhibitor is present. However, the amount of branched polyorganosiloxane may be 0% to 10%, alternatively 1% to 10%, alternatively 2% to 5%, and alternatively 3% to 4%, based on combined weights of starting materials (A) to (G) in the Si-PSA composition (e.g., based on combined weights of all starting materials in the Si-PSA composition excluding solvent).

### Starting Material (E) Fluorosilicone

The Si-PSA composition further comprises starting material (E), a poly(dialkyl/alkyl,fluoroalkyl)siloxane. The poly(dialkyl/alkyl,fluoroalkyl)siloxane may have 15 mol % to 29 mol% fluoroalkyl groups, and alternatively at least 16 mol %, alternatively at least 17 mol %, alternatively at least 18 mol %, and alternatively at least 19 mol %, of fluoroalkyl groups. Alternatively, poly(dialkyl/alkyl,fluoroalkyl)siloxane may contain up to 28 mol % of fluoroalkyl groups, and alternatively up to 27 mol % of fluoroalkyl groups. The poly(dialkyl/alkyl,fluoroalkyl)siloxane is free of organic groups capable of undergoing hydrosilylation reaction under the conditions described herein, such as aliphatically unsaturated hydrocarbon groups.

The fluoroalkyl groups may be have formula CₙF₍₂ₙ₊₁₎-R^{D}- where subscript n is 1 to 20, and R^{D} is an alkylene group of 2 to 30 carbon atoms, alternatively 2 to 10 carbon atoms, alternatively 2 to 6 carbon atoms. Examples of alkylene groups include ethylene, propylene, butylene, hexylene, and heptylene; alternatively ethylene, propylene, or butylene.

The poly(dialkyl/alkyl,fluoroalkyl)siloxane may have unit formula (E-1): (R^{M}₃SiO-_{1/2})₂(R^{M}R^{F}SiO_{2/2})_{f}(R^{M}₂SiO_{2/2})_{g}, where each R^{M} is an independently selected alkyl group of 1 to 30 carbon atoms; each R^{F} is an independently selected monovalent fluorinated alkyl group of 1 to 30 carbon atoms; subscript f > 0, subscript g > 0, with the proviso that a quantity (f + g) is 100 to 10,000.

Examples of poly(dialkyl/alkyl,fluoroalkyl)siloxanes suitable for use in the Si-PSA composition described herein include:
(E-2) bis-trimethylsiloxy-terminated, poly(dimethyl/methyl,3,3,3-trifluoropropyl)siloxane;
(E-3) bis-trimethylsiloxy-terminated, poly(dimethyl/methyl,perfluorobutylethyl)siloxane;
(E-4) bis-trimethylsiloxy-terminated, poly(dimethyl/methyl,perfluorohexylethyl)siloxane;
(E-5) a combination of two or more of (E-2) to (E-4). Suitable poly(dialkyl/alkyl,fluoroalkyl)siloxanes for use in the Si-PSA composition are commercially available from Dow Silicones Corporation and those poly(dialkyl/alkyl,fluoroalkyl)siloxanes disclosed in U.S. Patent Publication 2017/0190939, which discloses various organopolysiloxanes having fluorine-atom containing organic groups for use as release control agents, however these have been previously disclosed for use in release coatings, not silicone pressure sensitive adhesives. Without wishing to be bound by theory, it is particularly surprising that adding a certain poly(dialkyl/alkyl,fluoroalkyl)siloxane to the Si-PSA composition described herein would result in reducing adhesion on stainless steel, without a corresponding reduction of adhesion on AF glass, as shown below in the EXAMPLES herein.

The amount of poly(dialkyl/alkyl,fluoroalkyl)siloxane in the Si-PSA composition depends on various factors including the type and amount of other starting materials in the composition and the fluorine content of the poly(dialkyl/alkyl,fluoroalkyl)siloxane, however, the amount of poly(dialkyl/alkyl,fluoroalkyl)siloxane in the Si-PSA composition is 0.01% to < 3%, alternatively 0.5% to 2%, and alternatively 0.9% to 1.6%; based on combined weights of starting materials (A) to (G) in the Si-PSA composition (e.g., based on combined weights of all starting materials in the Si-PSA composition excluding solvent).

### Starting Material (F) Anchorage Additive

Starting material (F) is an anchorage additive that may optionally be included in the Si-PSA composition. Without wishing to be bound by theory, it is thought that the anchorage additive will facilitate bonding to a substrate by a Si-PSA prepared by curing the Si-PSA composition described herein. However, the presence of the anchorage additive will not detrimentally affect the desired peel adhesion, thereby allowing the Si-PSA to be removed from an electronic device without damaging the device or leaving significant residue.

Suitable anchorage additives include silane coupling agents such as methyltrimethoxysilane, vinyltrimethoxysilane, allyltrimethoxysilane, 3-methacryloxypropyltrimethoxysilane, 3-aminopropyltrimethoxysilane, N-(2-aminoethyl)-3-aminopropyltrimethoxysilane, bis(trimethoxysilyl)propane, and bis(trimethoxysilylhexane; and mixtures or reaction mixtures of said silane coupling agents. Alternatively, the anchorage additive may be tetramethoxysilane, tetraethoxysilane, dimethyldimethoxysilane, methylphenyldimethoxysilane, methylphenyldiethoxysilane, phenyltrimethoxysilane, methyltrimethoxysilane, methyltriethoxysilane, vinyltriethoxysilane, allyltriethoxysilane, 3-glycidoxypropyltrimethoxysilane, 3-glycidoxypropyltriethoxysilane, or 3-methacryloxypropyl trimethoxysilane.

Alternatively, the anchorage additive may be exemplified by a reaction product of a vinyl alkoxysilane and an epoxy-functional alkoxysilane; a reaction product of a vinyl acetoxysilane and epoxy-functional alkoxysilane; and a combination (e.g., physical blend and/or a reaction product) of a polyorganosiloxane having at least one aliphatically unsaturated hydrocarbon group and at least one hydrolyzable group per molecule and an epoxy-functional alkoxysilane (e.g., a combination of a hydroxy-terminated, vinyl functional polydimethylsiloxane with glycidoxypropyltrimethoxysilane). Suitable anchorage additives and methods for their preparation are disclosed, for example, in U.S. Patent Application Publication Numbers 2003/0088042, 2004/0254274, 2005/0038188, and 2012/0328863 at paragraph [0091], and U.S. Patent Publication 2017/0233612 at paragraph [0041]; and EP 0 556 023.

Anchorage additives are commercially available. For example, SYL-OFF^{™} 297 and SYL-OFF^{™} 397 are available from Dow Silicones Corporation of Midland, Michigan, USA. Other exemplary anchorage additives include (F-1) vinyltriacetoxysilane, (F-2) glycidoxypropyltrimethoxysilane, (F-3) a combination of (F-1) and (F-2), and (F-4) a combination of (F-3) and a polydimethylsiloxane terminated with hydroxyl groups, methoxy groups, or terminated with both a hydroxy group and a methoxy group. The combinations (F-3) and (F-4) may be physical blends and/or reaction products.

The amount of anchorage additive depends on various factors including the type of substrate to which the Si-PSA composition will be applied and whether a primer or other surface treatment will be used before application of the Si-PSA composition. However, the amount of anchorage additive may be 0 to 5%, alternatively 1% to 5%, alternatively 1% to 3%, and alternatively 1.9% to 2.1%, based on the combined weights of starting materials (A) to (G) in the Si-PSA composition (e.g., based on combined weights of all starting materials in the Si-PSA composition excluding solvent).

### Starting Material (G) Hydrosilylation Reaction Inhibitor

Starting material (G) is a hydrosilylation reaction inhibitor (inhibitor) that may optionally be used for altering rate of reaction of the silicon bonded hydrogen atoms and the aliphatically unsaturated hydrocarbon groups of other starting materials in the Si-PSA composition, as compared to reaction rate of the same starting materials but with the inhibitor omitted. Inhibitors are exemplified by acetylenic alcohols such as methyl butynol, ethynyl cyclohexanol, dimethyl hexynol, and 3,5-dimethyl-1-hexyn-3-ol, 1-butyn-3-ol, 1-propyn-3-ol, 2-methyl-3-butyn-2-ol, 3-methyl-1-butyn-3-ol, 3-methyl-1-pentyn-3-ol, 3-phenyl-1-butyn-3-ol, 4-ethyl-1-octyn-3-ol, 3,5-dimethyl-1-hexyn-3-ol, and 1-ethynyl-1-cyclohexanol, and a combination thereof; cycloalkenylsiloxanes such as methylvinylcyclosiloxanes exemplified by 1,3,5,7-tetramethyl-1,3,5,7-tetravinylcyclotetrasiloxane, 1,3,5,7-tetramethyl-1,3,5,7-tetrahexenylcyclotetrasiloxane, and a combination thereof; ene-yne compounds such as 3-methyl-3-penten-1-yne, 3,5-dimethyl-3-hexen-1-yne, and a combination thereof; triazoles such as benzotriazole; phosphines; mercaptans; hydrazines; amines, such as tetramethyl ethylenediamine, 3-dimethylamino-1-propyne, n-methylpropargylamine, propargylamine, and 1-ethynylcyclohexylamine; dialkyl fumarates such as diethyl fumarate, dialkenyl fumarates such as diallyl fumarate, dialkoxyalkyl fumarates, maleates such as diallyl maleate and diethyl maleate; nitriles; ethers; carbon monoxide; alkenes such as cyclo-octadiene, divinyltetramethyldisiloxane; alcohols such as benzyl alcohol; and a combination thereof.

Alternatively, the inhibitor may be a silylated acetylenic compound. Without wishing to be bound by theory, it is thought that adding a silylated acetylenic compound reduces yellowing of the reaction product prepared from hydrosilylation reaction as compared to a reaction product from hydrosilylation of starting materials that do not include a silylated acetylenic compound or that include an organic acetylenic alcohol inhibitor, such as those described above.

The silylated acetylenic compound is exemplified by (3-methyl-1-butyn-3-oxy)trimethylsilane, ((1,1-dimethyl-2-propynyl)oxy)trimethylsilane, bis(3-methyl-1-butyn-3-oxy)dimethylsilane, bis(3-methyl-1-butyn-3-oxy)silanemethylvinylsilane, bis((1,1-dimethyl-2-propynyl)oxy)dimethylsilane, methyl(tris(1,1-dimethyl-2-propynyloxy))silane, methyl(tris(3-methyl-1-butyn-3-oxy))silane, (3-methyl-1-butyn-3-oxy)dimethylphenylsilane, (3-methyl-1-butyn-3-oxy)dimethylhexenylsilane, (3-methyl-1-butyn-3-oxy)triethylsilane, bis(3-methyl-1-butyn-3-oxy)methyltrifluoropropylsilane, (3,5-dimethyl-1-hexyn-3-oxy)trimethylsilane, (3-phenyl-1-butyn-3-oxy)diphenylmethylsilane, (3-phenyl-1-butyn-3-oxy)dimethylphenylsilane, (3-phenyl-1-butyn-3-oxy)dimethylvinylsilane, (3-phenyl-1-butyn-3-oxy)dimethylhexenylsilane, (cyclohexyl-1-ethyn-1-oxy)dimethylhexenylsilane, (cyclohexyl-1-ethyn-1-oxy)dimethylvinylsilane, (cyclohexyl-1-ethyn-1-oxy)diphenylmethylsilane, (cyclohexyl-1-ethyn-1-oxy)trimethylsilane, and combinations thereof. Alternatively, the silylated acetylenic compound is exemplified by methyl(tris(1,1-dimethyl-2-propynyloxy))silane, ((1,1-dimethyl-2-propynyl)oxy)trimethylsilane, or a combination thereof. The silylated acetylenic compound useful as the inhibitor herein may be prepared by methods known in the art, for example, U.S. Patent 6,677,740 discloses silylating an acetylenic alcohol described above by reacting it with a chlorosilane in the presence of an acid receptor.

The amount of inhibitor added herein will depend on various factors including the desired reaction rate, the particular inhibitor used, and the selection and amount of starting materials (A) and (B). However, when present, the amount of inhibitor may range from > 0% to 1%, alternatively > 0% to 5%, alternatively 0.001% to 1%, alternatively 0.01% to 0.5%, and alternatively 0.002% to 0.25%, based on the combined weights of starting materials (A) to (G) in the Si-PSA composition (e.g., based on combined weights of all starting materials in the Si-PSA composition excluding solvent).

### Starting Material (H) Solvent

The Si-PSA composition may further comprise starting material (H), a solvent. The solvent may be an organic solvent such as a hydrocarbon, a ketone, an ester acetate, an ether, and/or a cyclic siloxane having an average degree of polymerization from 3 to 10. Suitable hydrocarbons for the solvent can be (H-1) an aromatic hydrocarbon such as benzene, toluene, or xylene; (H-2) an aliphatic hydrocarbon such as hexane, heptane, octane, or iso-paraffin; or (H-3) a combination thereof. Alternatively, the solvent may be a glycol ether such as propylene glycol methyl ether, dipropylene glycol methyl ether, propylene glycol n-butyl ether. Suitable ketones include acetone, methyl ethyl ketone, or methyl isobutyl ketone. Suitable ester acetates include ethyl acetate or isobutyl acetate. Suitable ethers include diisopropyl ether or 1,4-dioxane. Suitable cyclic siloxanes having a degree of polymerization from 3 to 10, alternatively 3 to 6, include hexamethylcyclotrisiloxane, octamethylcyclotetrasiloxane, and/or decamethylcyclopentasiloxane. Alternatively, the solvent may be selected from the group consisting of toluene, xylene, heptane, ethyl acetate, and a combination of two or more thereof.

The amount of solvent will depend on various factors including the type of solvent selected and the amount and type of other starting materials selected for the Si-PSA composition. However, the amount of solvent may range from 0% to 90%, alternatively 0% to 60%, alternatively 20 to 50%, alternatively 0 to 50%, and alternatively 20% to 60%, based on combined weights of all starting materials in the Si-PSA composition. The solvent can be added during preparation of the Si-PSA composition, for example, to aid mixing and delivery. All or a portion of the solvent may be added with one of the other starting materials. For example, the polyorganosilicate resin, the branched polyorganosiloxane polymer, and/or the catalyst, may be dissolved in a solvent before combination with the other starting materials in the Si-PSA composition. All or a portion of the solvent may optionally be removed after the Si-PSA composition is prepared.

### Method of Making the Si-PSA Composition

The Si-PSA composition can be prepared by a method comprising combining all starting materials as described above by any convenient means such as mixing at ambient or elevated temperature. The hydrosilylation reaction inhibitor may be added before the hydrosilylation reaction catalyst, for example, when the Si-PSA composition will be prepared at elevated temperature and/or the Si-PSA composition will be prepared as a one part composition.

The method may further comprise delivering one or more starting materials in a solvent (e.g., the hydrosilylation reaction catalyst, the polyorganosilicate resin, and/or the branched polyorganosiloxane polymer) may be dissolved in a solvent when combined with one or more of the other starting materials in the Si-PSA composition. One skilled in the art would understand that if it is desired that the resulting Si-PSA composition will be solventless (i.e., will contain no solvent or may contain trace amounts of residual solvent from delivery of a starting material, however, a solvent e.g., organic solvent such as toluene or non-functional polydiorganosiloxane), then solvent may be removed after mixing two or more of the starting materials, and in this embodiment solvent is not intentionally added to the Si-PSA composition.

Alternatively, the Si-PSA composition may be prepared as a multiple part composition, for example, when the Si-PSA composition will be stored for a long period of time before use, e.g., up to 6 hours before coating the Si-PSA composition on a substrate. In the multiple part composition, the hydrosilylation reaction catalyst is stored in a separate part from any starting material having a silicon bonded hydrogen atom, for example the polyorganohydrogensiloxane, and the parts are combined shortly before use of the Si-PSA composition.

For example, a multiple part composition may be prepared by combining starting materials comprising at least some of the polydialkylsiloxane terminated with an aliphatically unsaturated group, the polyalkylhydrogensiloxane, and optionally one or more other additional starting materials described above to form a base part, by any convenient means such as mixing. A curing agent may be prepared by combining starting materials comprising at least some of the polydialkylsiloxane terminated with an aliphatically unsaturated group, the hydrosilylation reaction catalyst, and optionally one or more other additional starting materials described above by any convenient means such as mixing. The starting materials may be combined at ambient or elevated temperature. The hydrosilylation reaction inhibitor may be included in one or more of the base part, the curing agent part, or a separate additional part. The anchorage additive may be added to the base part, or may be added as a separate additional part. The siloxane selected from the group consisting of the polyorganosilicate resin, the branched polyorganosiloxane polymer, and a combination thereof may be added to the base part, the curing agent part, or a separate additional part. The branched polyorganosiloxane and/or the polyorganosilicate resin may be added to the base part. The solvent may be added to the base part. Alternatively, starting materials comprising the polyorganosilicate resin and/or the branched polyorganosiloxane, and some or all of the solvent may be added in a separate additional part. When a two part composition is used, the weight ratio of amounts of base part to curing agent part may range from 1:1 to 10:1. The Si-PSA composition will cure via hydrosilylation reaction to form a Si-PSA.

The method described above may further comprise one or more additional steps. The Si-PSA composition prepared as described above may be used to form an adhesive article, e.g., a Si-PSA (prepared by curing the Si-PSA composition described above) on a substrate. The method may, therefore, further comprise comprises applying the Si-PSA composition to a substrate.

Applying the Si-PSA composition to the substrate can be performed by any convenient means. For example, the Si-PSA composition may be applied onto a substrate by gravure coater, comma coater, offset coater, offset-gravure coater, roller coater, reverse-roller coater, air-knife coater, or curtain coater.

The substrate can be any material that can withstand the curing conditions (described below) used to cure the pressure sensitive adhesive composition to form the pressure sensitive adhesive on the substrate. For example, any substrate that can withstand heat treatment at a temperature equal to or greater than 120°C, alternatively 150°C is suitable. Examples of materials suitable for such substrates including polymeric films such as polyimide (PI), polyetheretherketone (PEEK), polyethylene naphthalate (PEN), liquid-crystal polyarylate, polyamideimide (PAI), polyether sulfide (PES), polyethylene terephthalate (PET), polycarbonate (PC), thermoplastic polyurethane (TPU), polyethylene (PE), or polypropylene (PP). Alternatively, the substrate may be glass. The thickness of the substrate is not critical, however, the thickness may be 5 µm to 300 µm, alternatively 50 µm to 250 µm, and alternatively 50 µm. Alternatively, the substrate may be selected from the group consisting of PET, TPU, PC, and glass. Alternatively, the substrate may be a polymeric substrate, such as PET.

To improve bonding of the Si-PSA to the substrate, the method for forming the adhesive article may optionally further comprise treating the substrate before applying the Si-PSA composition. Treating the substrate may be performed by any convenient means, such as applying a primer, or subjecting the substrate to corona-discharge treatment, etching, or plasma treatment before applying the Si-PSA composition to the substrate.

An adhesive article such as a film or tape may be prepared by applying the Si-PSA composition described above onto the substrate described above. When the Si-PSA composition contains a solvent, the method may further comprise removing the all, or a portion, of the solvent before and/or during curing. Removing solvent may be performed by any convenient means, such as heating at a temperature that vaporizes the solvent without fully curing the Si-PSA composition, e.g., heating at a temperature of 70°C to 120°C, alternatively 50°C to 100°C, and alternatively 70°C to 80°C for a time sufficient to remove all or a portion of the solvent (e.g., 30 seconds to 1 hour, alternatively 1 minute to 5 minutes).

Curing the Si-PSA composition may be performed by heating at a temperature of 80°C to 200°C, alternatively 90°C to 180°C, alternatively 100°C to 160°C, and alternatively 110°C to 150°C for a time sufficient to cure the Si-PSA composition (e.g., for 30 seconds to an hour, alternatively 1 to 5 minutes). If cure speed needs to be increased or the process oven temperatures lowered, the catalyst level can be increased. This forms a pressure sensitive adhesive on the substrate. Curing may be performed by placing the substrate in an oven. The amount of the Si-PSA composition to be applied to the substrate depends on the specific application, however, the amount may be sufficient such that after curing thickness of the pressure sensitive adhesive may be 5 µm to 100 µm, and for protective film the thickness may be 5 µm to 50 µm, alternatively 10 µm to 40 µm, and alternatively 15 µm to 40 µm.

The method described herein may optionally further comprise applying a removable release liner to the Si-PSA opposite the substrate, e.g., to protect the Si-PSA before use of the adhesive article. The release liner may be applied before, during or after curing the Si-PSA composition; alternatively after curing. The adhesive article may be a protective film for use in a display device.

### Use in a Protective Film

Figure 1 shows a partial cross section of a protective film (100) overlying a surface (106a) of an anti-fingerprint coating (106) overlying a surface (107a) of a display cover glass (107) such that the opposing surface (106b) of the anti-fingerprint coating (106) contacts the surface (107a) of the cover glass (107). The protective film (100) includes a Si-PSA (105) having a surface (105a) and an opposing surface (105b). The opposing surface (105b) of the Si-PSA (105) adheres to the surface (106a) of the AF coating with a peel adhesion of > 30 g/in, as measured according to Reference Example C, below. The Si-PSA may have a thickness of 15 µm to 40 µm. The Si-PSA (105) is carried on a substrate (104) having a surface (104a) and an opposing surface (104b). The surface (105a) of the Si-PSA (105) contacts the opposing surface (104b) of the substrate (104). The substrate (104) may be selected from the group consisting of PET, TPU, PC, and glass and may have a thickness of 50 µm to 250 µm.

The protective film (100) may further comprise an anti-fingerprint hard coating (103) having a surface (103a) and an opposing surface (103b) overlying the substrate (104) such that the opposing surface (103b) of the anti-fingerprint hard coating (103) contacts the surface (104a) of the substrate (104).

The protective film (100) may further comprise a second Si-PSA (102) having a surface (102a) and an opposing surface (102b) and a polymeric substrate (101) having a surface (101b). The second Si-PSA (102) is coated on the polymeric substrate (101) such that the surface (102a) of the second Si-PSA (102) contacts the surface (101b) of the polymeric substrate (101). The opposing surface (102b) of the second Si-PSA (102) contacts the surface (103a) of the anti-fingerprint hard coating (103). The second Si-PSA (102) may have a thickness of 10 µm, and the polymeric substrate (101) may have a thickness of 50 µm. The second substrate (101) may be PET.

The Si-PSA composition and method described above may be used in fabrication of the protective film (100). The Si-PSA composition may be applied to the opposing surface (104b) of the substrate (104) and cured to form the Si-PSA (105). Alternatively, the Si-PSA composition described herein may be applied to the surface (101b) of the polymeric substrate (101) and cured to form the second Si-PSA (102). Without wishing to be bound by theory, it is thought that the Si-PSA prepared by curing the Si-PSA composition described above may have adhesion on the surface (106a) of the anti-fingerprint coating (106) of > 30 g/in and adhesion on stainless steel < 800 g/in, as measured by the method described below in Reference Example C.

### EXAMPLES

These examples are intended to illustrate the invention to one skilled in the art and are not to be interpreted as limiting the scope of the invention set forth in the claims. The materials in Table 1 were used in these examples.

**Table 1**

| Starting Material | Description | Source |
|---|---|---|
| Polymer 1A | dimethylvinyl-siloxy terminated polydimethylsiloxane with Mn = 702,000 g/mol measured by GPC | Dow Silicones Corporation |
| Polymer 2A | 50:50 mixture of dimethylvinyl-siloxy terminated polydimethylsiloxane with Mn = 62,000 g/mol and dimethylvinylsiloxy-terminated polydimethylsiloxane with Mn = 35,000 g/mol | 50:50 mixture of SILASTIC^{™} SFD-128 and SILASTIC^{™}SFD-120 |
| Polymer 3A | bis-vinyldimethylsiloxy terminated polydimethylsiloxane with Mn = 22,000 g/mol | SILASTIC^{™} SFD-117 |
| Crosslinker 1B | trimethyl-siloxy terminated poly(dimethyl/methylhydrogen)siloxane with SiH content = 1.6% | SYL-OFF^{™} SL 7028 |
| Crosslinker 2B | trimethylsiloxy-terminated poly(dimethyl, methylhydrogen)siloxane viscosity of 5 mPa-sec and SiH content = 0.76% | DOWSIL^{™} 6-3570 |
| Catalyst 1C | Karstedt's Catalyst | SYL-OFF^{™} 4000 Catalyst |
| Resin 1D | polymethylsilicate resin with Mn = 2,900 g/mol | Dow Silicones Corporation |
| Branched Siloxane 2D | tetrakis(vinyldimethylsiloxy)silane | Dow Silicones Corporation |
| Resin 3D | capped polymethylsilicate resin with hydroxyl content = 0 - 2% | Dow Silicones Corporation (Resin 3D is the solids content of 5-7104H) |
| Resin 4D | capped polymethylsilicate resin with Mn = 2,900 g/mol | Dow Silicones Corporation |
| Fluorosilicone 1E | bis-trimethylsiloxy-terminated poly(dimethyl/ methyl, perfluorobutylethyl)siloxane | Dow Silicones Corporation |
| Fluorosilicone Mix 2 | 88% dimethylvinylsiloxy-terminated poly (methyl,perfluorobutylethyl/methyl,vinyl)siloxane and 12% heptane | SYL-OFF^{™} Q2-7785 Release Coating |
| Fluorosilicone 3 | Tetra(alkylsiloxy)silane reaction with dimethyl and methylalkyl cyclosiloxanes and dimethyl siloxane; Tetra(dimethylvinylsiloxy)silane reaction with dimethyl and methylalkyl cyclosiloxanes; and Trifluoropropyl methyl cyclotetrasiloxane | SYL-OFF^{™} 7555 Coating |
| 510 Fluid (comparative additive) | trimethylsiloxy-terminated poly(dimethyl/phenylmethyl)siloxane with viscosity 30,000 cSt at 25 C | DOWSIL^{™} 510 Fluid |
| Anchorage Additive 1F | Vinyltriacetoxysilane and Glycidoxypropyltrimethoxysilane | SYL-OFF^{™} 297 |
| Anchorage Additive 2F | mixture of reactive silanes | SYL-OFF^{™} 397 |
| Inhibitor 1F | 1-ethynyl-1-cyclohexanol | commercially available from various sources |
| Solvent 1G | heptane | commercially available from various sources |
| Solvent 2G | mixture of toluene, xylene, and ethylbenzene | commercially available from various sources |
| Solvent 3G | toluene | commercially available from various sources |

| | | |
|---|---|---|
| DOWSIL^{™}, SILASTIC^{™}, and SYL-OFF^{™} products are commercially available form Dow Silicones Corporation of Midland, Michigan, USA. | | |

### Reference Example A - Preparation of Si-PSA Compositions

Samples of Si-PSA compositions were prepared by combining the starting materials in the amounts (in weight parts) shown below in Table 2. First, a mixture and Resin 1 were blended. Then, a Crosslinker, an Anchorage Additive, a Fluorosilicone, a Solvent, and a Catalyst were mixed therewith. All the starting materials were mixed at room temperature.

### Reference Example B - Preparation of Si-PSA Tape

Each Si-PSA composition prepared as described above in Reference Example A was applied on PET film with a thickness of 100 µm and heating in an oven at 150°C for 2 minutes. The Si-PSA had a thickness of 30 µm to 35 µm after heating.

The resulting tape samples were applied to substrates such that the Si-PSA contacted the substrate. The substrates were AF glass (glass with anti-fingerprint coating) and SUS (stainless steel), and samples kept at RT for 30 minutes after contacting the Si-PSA with the substrate before testing.

### Reference Example C - Adhesion Testing

Each tape sample prepared as described above was tested for adhesion to the AF glass and SUS substrates by peeling the tape from the substrate, and checking if there was any Si-PSA transferred onto the AF glass and SUS from the PET film. An Adhesion/Release Tester AR-1500 was used for this test. The width of each PET sheet was 1 inch. Peel speed and angle were 0.3 m/min and 180°, respectively. The unit was grams/lnch. Results are shown below in Table 2. The following conversion can be employed: 1 inch = 2.54 cm.

**Table 2 - Sample Preparation and Adhesion Test Results**

| Starting Material | C1 | W1 | C2 | W2 | W3 | C3 | C4 | C5 | C6 | C7 | C8 |
|---|---|---|---|---|---|---|---|---|---|---|---|
| Polymer 1A | 8 | 8 | 8 | 8 | 8 | 8 | 8 | 8 | 8 | 6.66 | 6.66 |
| Polymer 2A | 1.299 | 1.299 | 1.299 | 1.299 | 1.299 | 1.299 | 1.299 | 1.299 | 1.299 | 0 | 0 |
| Polymer 3A | 0 | 0 | 0 | 0 | 0 | 0 | 0 | 0 | 0 | 3.3 | 0 |
| Crosslinker 1B | 0.5 | 0.5 | 0.5 | 0.5 | 0.5 | 0.5 | 0.5 | 0.5 | 0.5 | 0.5 | 0.5 |
| Crosslinker 2B | 0 | 0 | 0 | 0 | 0 | 0 | 0 | 0 | 0 | 0.22 | 0.22 |
| Catalyst 1C | 0.9 | 0.9 | 0.9 | 0.9 | 0.9 | 0.9 | 0.9 | 0.9 | 0.9 | 0.9 | 0.9 |
| Resin 1D | 16.925 | 16.925 | 16.925 | 16.925 | 16.925 | 16.925 | 16.925 | 16.925 | 16.925 | 0 | 0 |
| Branched Siloxane 2D | 0.7 | 0.7 | 0.7 | 0.7 | 0.7 | 0.7 | 0.7 | 0.7 | 0.7 | 0 | 0 |
| Resin 3D | 3.354 | 3.354 | 3.354 | 3.354 | 3.354 | 3.354 | 3.354 | 3.354 | 3.354 | 5.616 | 0 |
| Resin 4D | 0 | 0 | 0 | 0 | 0 | 0 | 0 | 0 | 0 | 13.055 | 14.665 |
| Fluorosilicone 1E | 0 | 0.5 | 0 | 0.3 | 0.5 | 1 | 0 | 0 | 0 | 0.15 | 0.15 |
| Fluorosilicone Mix 2 (comparative) | 0 | 0 | 0 | 0 | 0 | 0 | 0.44 | 0 | 0 | 0 | 0 |
| Fluorosilicone 3 (comparative) | 0 | 0 | 0 | 0 | 0 | 0 | 0 | 0.5 | 0 | 0 | 0 |
| 510 Fluid (comparative additive) | 0 | 0 | 0 | 0 | 0 | 0 | 0 | 0 | 0.5 | 0 | 0 |
| Anchorage Additive 1F | 0.5 | 0.5 | 0 | 0 | 0 | 0 | 0 | 0 | 0 | 0 | 0 |
| Anchorage Additive 2F | 0 | 0 | 0.75 | 0.75 | 0.75 | 0.75 | 0.75 | 0.75 | 0.75 | 0.75 | 0.75 |
| Inhibitor 1F | 0.0764 | 0.0764 | 0.0764 | 0.0764 | 0.0764 | 0.0764 | 0.0764 | 0.0764 | 0.0764 | 0.15 | 0.15 |
| Solvent 1G | 11 | 11 | 11 | 11 | 11 | 11 | 11.06 | 11 | 11 | 0 | 0 |
| Solvent 2G | 25.946 | 25.946 | 25.946 | 25.946 | 25.946 | 25.946 | 25.946 | 25.946 | 25.946 | 7.179 | 6.285 |
| Solvent 3G | 0 | 0 | 0 | 0 | 0 | 0 | 0 | 0 | 0 | 26.54 | 27.54 |
| Resin/Polvmer Weight Ratio | 2.3 | 2.3 | 2.3 | 2.3 | 2.3 | 2.3 | 2.3 | 2.3 | 2.3 | 1.9 | 2.2 |
| Adhesion to AF glass (g/in) | 49 | 44 | 35.7 | 33.7 | 35.6 | 10 | 15.5 | 23.4 | 20.5 | 28.1 | 31.4 |
| Adhesion to SUS (g/in) | 970 | 570 | 889 | 644 | 457 | 460 | 415 | 673 | 575 | 612 | 1063 |

Table 3 Shows Weight % of Each Starting Material, Excluding Solvent, in the Samples shown in Table 2

**Table3**

| Starting Material | C1 | W1 | C2 | W2 | W3 | C3 | C4 | C5 | C6 | C7 | C8 |
|---|---|---|---|---|---|---|---|---|---|---|---|
| Polymer 1A | 24.8% | 24.4% | 24.6% | 24.4% | 24.2% | 23.9% | 24.3% | 24.2% | 24.2% | 21.3% | 27.8% |
| Polymer 2A | 4.0% | 4.0% | 4.0% | 4.0% | 3.9% | 3.9% | 3.9% | 3.9% | 3.9% | 0 | 0 |
| Polymer 3A | 0 | 0 | 0 | 0 | 0 | 0 | 0 | 0 | 0 | 10.5% | 0 |
| Crosslinker 1B | 1.6% | 1.5% | 1.5% | 1.5% | 1.5% | 1.5% | 1.5% | 1.5% | 1.5% | 1.6% | 2.1% |
| Crosslinker 2B | 0 | 0 | 0 | 0 | 0 | 0 | 0 | 0 | 0 | 0.7% | 0.9% |
| Catalyst 1C | 2.8% | 2.8% | 2.8% | 2.7% | 2.7% | 2.7% | 2.7% | 2.7% | 2.7% | 2.9% | 3.8% |
| Resin 1D | 52.5% | 51.7% | 52.1% | 51.6% | 51.3% | 50.5% | 51.4% | 51.3% | 51.3% | 0 | 0 |
| Branched Siloxane 2D | 2.2% | 2.1% | 2.2% | 2.1% | 2.1% | 2.1% | 2.1% | 2.1% | 2.1% | 0 | 0 |
| Resin 3D | 10.4% | 10.2% | 10.3% | 10.2% | 10.2% | 10.0% | 10.2% | 10.2% | 10.2% | 17.9% | 0 |
| Resin 4D | 0 | 0 | 0 | 0 | 0 | 0 | 0 | 0 | 0 | 41.7% | 61.1% |
| Fluorosilicone 1E | 0 | 1.5% | 0 | 0.9% | 1.5% | 3.0% | 0 | 0 | 0 | 0.5% | 0.6% |
| Fluorosilicone Mix 2 | 0 | 0 | 0 | 0 | 0 | 0 | 1.3% | 0 | 0 | 0 | 0 |
| Fluorosilicone 3 | 0 | 0 | 0 | 0 | 0 | 0 | 0 | 1.5% | 0 | 0 | 0 |
| 510 Fluid (comparative additive) | 0 | 0 | 0 | 0 | 0 | 0 | 0 | 0 | 1.5% | 0 | 0 |
| Anchorage Additive 1F | 1.55% | 1.53% | 0 | 0 | 0 | 0 | 0 | 0 | 0 | 0 | 0 |
| Anchorage Additive 2F | 0 | 0 | 2.3% | 2.3% | 2.3% | 2.2% | 2.3% | 2.3% | 2.3% | 2.4% | 3.1% |
| Inhibitor 1F | 0.2% | 0.2% | 0.2% | 0.2% | 0.2% | 0.2% | 0.2% | 0.2% | 0.2% | 0.5% | 0.6% |

### PROBLEMS TO BE SOLVED

Conventional silicone pressure sensitive adhesives lack the combination of properties desired for protective films used on AF glass in display devices, such as high adhesion to anti-fingerprint coatings on glass and low adhesion to stainless steel.

Electronic device fabricators are seeking a new protective film for AF glass. The peel adhesion should be > 30g/in on AF glass and < 700g/in on SUS. Selective adhesion to different substrates is a challenge for the Si-PSA industry. Conventional Si-PSAs may be able to meet one, but not both, of these peel adhesion criteria.

### INDUSTRIAL APPLICABILITY

The working examples above showed that Si-PSA compositions that cure to form Si-PSAs with > 30 g/in on AF glass and < 700 g/in on SUS were prepared. For example, the working examples W1, W2, and W3 had peel adhesion on AF glass of 44 g/in, 33.7 g/in, and 35.6 g/in, respectively. Without wishing to be bound by theory, it is thought that the Si-PSA compositions described herein may cure to form Si-PSAs with peel adhesion on AF glass of > 30 g/in to 45 g/in. The working examples above further showed that Si-PSA compositions that cure to form Si-PSAs with < 700 g/in peel adhesion on SUS were prepared. For example, working examples W1, W2, and W3 had peel adhesion on SUS of 570, 644, and 457, respectively. Without wishing to be bound by theory, it is thought that the Si-PSA compositions described herein may cure to form Si-PSAs with peel adhesion on SUS of 450 g/in to < 700 g/in, alternatively 450 g/in to 650 g/in.

The inventors surprisingly found that adding a poly(dialkyl/alkyl,fluoroalkyl)siloxane to a hydrosilylation reaction curable composition could reduce peel adhesion on SUS to < 700 g/inch without significantly reducing peel adhesion on AF glass. That the poly(dialkyl/alkyl,fluoroalkyl)siloxane selectively modified adhesion to one substrate but not another was particularly unexpected. Working Example 1 (W1) showed that when a poly(dialkyl/alkyl,fluoroalkyl)siloxane was added to a pressure sensitive adhesive composition (of C1), which did not contain a poly(dialkyl/alkyl,fluoroalkyl)siloxane), adhesion to stainless steel was reduced from 970 g/in to 570 g/in without significant decrease of peel adhesion on AF glass. Comparative Example 2 and Working Examples 2 and 3 also showed that when different amounts of a poly(dialkyl/alkyl,fluoroalkyl)siloxane was added to a pressure sensitive adhesive composition (of C2), adhesion to stainless steel was reduced from 889 g/inch to < 700 g/inch without a significant detrimental impact on adhesion to anti-fingerprint coated glass. Comparative Example 3 (C3) showed that when the content of the poly(dialkyl/alkyl,fluoroalkyl)siloxane was too high, then the Si-PSA had insufficient adhesion to AF glass for some applications. Comparative Examples 4 and 5 (C4 and C5, respectively) did not show the same benefit with different fluorosilicones (i.e., the fluorosilicones having aliphatically unsaturated groups tested in the compositions described above). Comparative Example 6 (C6) showed that the benefit of selective adhesion to AF glass and SUS was not achieved using a conventional release modifier, i.e., bis-trimethylsiloxy-terminated poly(dimethyl/methylphenyl)siloxane. Comparative Example 7 (C7) showed that when Resin/Polymer ratio was low, i.e., 1.9/1, adhesion to AF glass was too low for some applications. Comparative Example 8 (C8) showed that when the content of poly(dialkyl/alkyl,fluoroalkyl)siloxane was too low, then adhesion to SUS was not reduced sufficiently for some applications.

The Si-PSA prepared by curing the Si-PSA composition described herein may find use in fabrication of various display devices such as mobile telephones, mobile television receivers, wireless devices, smartphones, personal data assistants, wireless electronic mail receivers, hand - held or portable computers, netbooks, notebooks, smartbooks, tablets, global positioning system receivers / navigators, cameras, digital media players, camcorders, game consoles, and electronic reading devices. The protective film comprising the Si-PSA on a surface of a substrate may be used on AF glass for the display devices described above. The selective adhesion to AF glass and SUS properties of the Si-PSA prepared from the Si-PSA composition described herein make the protective film suitable for use on 2.5D AF glass and 3D AF glass, which can be used in the display devices described above.

### DEFINITIONS AND USAGE OF TERMS

All amounts, ratios, and percentages herein are by weight, unless otherwise indicated. The abbreviations used herein have the definitions in Table 3.

**Table 3 - Abbreviations**

| Abbreviation | Definition |
|---|---|
| 2.5D glass | refers to glass that is flat in the middle, but is rounded down at the edges |
| 3D glass | refers to glass that is either curved in the middle, or has an upwards ridge at the edge, either possibly in combination with a rounded down edge (or other more complex curves) |
| AF | anti-fingerprint |
| AF glass | glass having an anti-fingerprint coating on its surface. |
| DP | degree of polymerization |
| FTIR | Fourier Transform Infra Red: The concentration of silanol groups present in the polyorganosilicate resin may be determined using FTIR spectroscopy according to ASTM Standard E-168-16. |
| g | grams |
| g/in | grams per inch |
| g/mol | grams per mol |
| GPC | qel permeation chromatography |
| kg | kiloqram |
| m | meters |
| Me | methyl |
| min | minutes |
| mm | millimeters |
| Mn | number average molecular weight measured by GPC as disclosed in U.S. Patent 9,593,209, Reference Example 1 at col. 31 |
| mPa·s | megaPascal seconds |
| NMR | Nuclear Magnetic Resonance: the 29 Si NMR technique described in US Patent 9,509,209, Reference Example 2 at col. 32 can be used to measure molar ratios of M to Q siloxy units in the polyorganosilicate resin. |
| PET | polyethylene terephthalate |
| Ph | phenyl |
| PSA | pressure sensitive adhesive, including but not limited to acrylic, rubber, and/or silicone pressure sensitive adhesives |
| Si-PSA | silicone pressure sensitive adhesive |
| SUS | stainless steel |
| µm | micrometers |
| Vi | vinyl |

## Claims

1. A silicone pressure sensitive adhesive composition comprising:
10 weight % to 60 weight %, based on combined weights of starting materials (A) to (G), of (A) a polydialkylsiloxane terminated with an aliphatically unsaturated group;
0.1 weight % to 5 weight %, based on combined weights of starting materials (A) to (G), of (B) a polyalkylhydrogensiloxane;
0.01 weight % to 5 weight %, based on combined weights of starting materials (A) to (G), of (C) a hydrosilylation reaction catalyst;
5 weight % to 75 weight %, based on combined weights of starting materials (A) to (G), of (D) a siloxane selected from the group consisting of
(D-1) a polyorganosilicate resin,
(D-2) a branched polyorganosiloxane polymer, and
(D-3) a combination of both (D-1) and (D-2);
with the proviso that starting materials (A) and (D) are present in amounts sufficient to provide a (D)/(A) ratio of ≥ 2/1;
≥ 0.65 weight % to < 3 weight %, based on combined weights of starting materials (A) to (G), of (E) a poly(dialkyl/alkyl,fluoroalkyl)siloxane;
0.1 weight % to 5 weight %, based on combined weights of starting materials (A) to (G), of (F) an anchorage additive;
0 weight % to 5 weight %, based on combined weights of starting materials (A) to (G), of (G) a hydrosilylation reaction inhibitor; and
0 weight % to 60 weight %, based on combined weights of all starting materials in the composition, of (H) a solvent.

2. The composition of claim 1, where starting material (A) the polydialkylsiloxane terminated with an aliphatically unsaturated group has unit formula (A-1): (R^{M}₂R^{U}SiO-_{1/2})₂(R^{M}₂SiO_{2/2})ₐ, where each R^{M} is an independently selected alkyl group of 1 to 30 carbon atoms; each R^{U} is an independently selected monovalent aliphatically unsaturated hydrocarbon group of 2 to 30 carbon atoms; and subscript a has a value of 4 to 10,000.

3. The composition of claim 1 or claim 2, where starting material (B) the polyalkylhydrogensiloxane has unit formula (B-1):
(R^{M}₃SiO_{1/2})ᵣ(R^{M}₂HSiO_{1/2})ₛ(R^{M}₂SiO_{2/2})ₜ(R^{M}HSiO_{2/2})ᵤ, where each R^{M} is an independently selected alkyl group of 1 to 30 carbon atoms; subscript r is 0, 1, or 2; subscript s is 0, 1, or 2, with the proviso that a quantity (r + s) = 2; subscript t ≥ 0, subscript u > 0, with the proviso that a quantity (s + u) > 2, and a quantity (r + s + t + u) is 4 to 500.

4. The composition of any one of claims 1 to 3, where starting material (C), the hydrosilylation reaction catalyst, comprises a platinum - organosiloxane complex.

5. The composition of any one of claims 1 to 4, where starting material (D-1), the polyorganosilicate resin, is present at 4 weight % to 74 weight % based on combined weights of starting materials (A) to (G), and starting material (D-1) comprises unit formula (D-1-1): (R^{M}₃SiO-_{1/2})ₘ(R^{M}₂R^{U}SiO-_{1/2})ₙ(SiO_{4/2})ₒ, where each R^{M} is an independently selected alkyl group of 1 to 30 carbon atoms; each R^{U} is an independently selected monovalent aliphatically unsaturated hydrocarbon group of 2 to 30 carbon atoms; and subscripts m, n and o have values such that m > 0, n ≥ 0, o > 1, with the proviso that a quantity (m + n + o) has a value sufficient to provide the polyorganosilicate resin with a number average molecular weight of 1,000 g/mol to 30,000 g/mol.

6. The composition of any one of claims 1 to 5, where starting material (D-2), the branched polyorganosiloxane polymer, is present at 1 weight % to 10 weight %, based on combined weights of starting materials (A) to (G), and starting material (D-2) comprises unit formula (D-2-1): (R^{M}₃SiO_{1/2})_{b}(R^{M}₂R^{U}SiO_{1/2})_{c}(R^{M}₂SiO_{2/2})_{d}(SiO_{4/2})ₑ, where each R^{M} is an independently selected alkyl group of 1 to 30 carbon atoms; each R^{U} is an independently selected monovalent aliphatically unsaturated hydrocarbon group of 2 to 30 carbon atoms; and subscripts b, c, d, and e have the following values b ≥ 0, c ≥ 0, a quantity (b + c) ≥ 4, d is 0 to 995, and e ≥ 1.

7. The composition of any one of claims 1 to 6, where starting material (E), the poly(dialkyl/alkyl,fluoroalkyl)siloxane, has unit formula (E-1):
(R^{M}₃SiO-_{1/2})₂(R^{M}R^{F}SiO_{2/2})_{f}(R^{M}₂SiO_{2/2})_{g}, where each R^{M} is an independently selected alkyl group of 1 to 30 carbon atoms; each R^{F} is an independently selected monovalent fluorinated alkyl group of 1 to 30 carbon atoms; subscript f > 0, subscript g > 0, with the proviso that a quantity (f + g) is 100 to 10,000.

8. The composition of any one of claims 1 to 7, where each R^{M} is methyl and each R^{U} is independently selected from the group consisting of vinyl, allyl, and hexenyl.

9. The composition of any one of claims 1 to 8, where starting material (F), the anchorage additive, is selected from the group consisting of (F-1) vinyltriacetoxysilane, (F-2) glycidoxypropyltrimethoxysilane, (F-3) a combination of (F-1) and (F-2), and (F-4) a combination of (F-3) and a polydimethylsiloxane terminated with hydroxyl groups, methoxy groups, or terminated with both a hydroxy group and a methoxy group.

10. The composition of any one of claims 1 to 9, where starting material (G), the hydrosilylation reaction inhibitor, is present and is selected from the group consisting of 1-ethynyl-1-cyclohexanol, methyl butynol, and diallyl maleate.

11. The composition of any one of claims 1 to 10, where starting material (H), the solvent, is present and is selected from the group consisting of toluene, xylene, heptane, ethyl acetate, and a combination of two or more thereof.

12. A silicone pressure sensitive adhesive prepared by curing the composition of any one of the preceding claims.

13. A protective film comprising:
1) the silicone pressure sensitive adhesive of claim 12,
2) a substrate having a surface, where the silicone pressure sensitive adhesive is coated on the surface of the substrate.

14. A method for preparing protective film comprising:
optionally 1) treating a surface of a substrate,
2) coating the silicone pressure sensitive adhesive composition of any one of claims 1 to 11 on the surface of the substrate,
optionally 3) removing some or all of the solvent, when present, and
4) curing the pressure sensitive adhesive composition.

15. Use of the protective film of claim 13 or the protective film prepared by the method of claim 14 on an anti-fingerprint coating for a display glass.

## Patentansprüche

1. Siliconhaftklebstoffzusammensetzung, umfassend:
zu 10 Gew.-% bis 60 Gew.-%, bezogen auf kombinierte Gewichtungen von Ausgangsmaterialien (A) bis (G), von (A) ein Polydialkylsiloxan, das mit einer aliphatisch ungesättigten Gruppe terminiert ist;
zu 0,1 Gew.-% bis 5 Gew.-%, bezogen auf kombinierte Gewichtungen von Ausgangsmaterialien (A) bis (G), von (B) ein Polyalkylhydrogensiloxan;
zu 0,01 Gew.-% bis 5 Gew.-%, bezogen auf kombinierte Gewichtungen von Ausgangsmaterialien (A) bis (G), von (C) ein Hydrosilylierungsreaktionskatalysator;
zu 5 Gew.-% bis 75 Gew.-%, bezogen auf kombinierte Gewichtungen von Ausgangsmaterialien (A) bis (G), von (D) ein Siloxan ausgewählt aus der Gruppe bestehend aus
(D-1) einem Polyorganosilicatharz,
(D-2) einem verzweigten Polyorganosiloxanpolymer, und
(D-3) einer Kombination von sowohl (D-1) als auch (D-2);
mit der Maßgabe, dass die Ausgangsmaterialien (A) und (D) in Mengen vorhanden sind, die ausreichen, um ein (D)/(A)-Verhältnis von ≥ 2/1 bereitzustellen;
zu ≥ 0,65 Gew.-% bis < 3 Gew.-%, bezogen auf kombinierte Gewichtungen von Ausgangsmaterialien (A) bis (G), von (E) ein Poly(dialkyl/alkyl,fluoralkyl)siloxan;
zu 0,1 Gew.-% bis 5 Gew.-%, bezogen auf kombinierte Gewichtungen von Ausgangsmaterialien (A) bis (G), von (F) ein Verankerungsadditiv;
zu 0 Gew.-% bis 5 Gew.-%, bezogen auf kombinierte Gewichtungen von Ausgangsmaterialien (A) bis (G), von (G) ein Hydrosilylierungsreaktionsinhibitor; und
zu 0 Gew.-% bis 60 Gew.-%, bezogen auf kombinierte Gewichtungen aller Ausgangsmaterialien in der Zusammensetzung, von (H) ein Lösungsmittel.

2. Zusammensetzung nach Anspruch 1, wobei das Ausgangsmaterial (A) das Polydialkylsiloxan, das mit einer aliphatisch ungesättigten Gruppe terminiert ist, die Einheitsformel (A-1) aufweist: (R^{M}₂R^{U}SiO_{1/2})₂(R^{M}₂SiO_{2/2})ₐ, wobei jedes R^{M} eine unabhängig ausgewählte Alkylgruppe von 1 bis 30 Kohlenstoffatomen ist; jedes R^{U} eine unabhängig ausgewählte einwertige aliphatisch ungesättigte Kohlenwasserstoffgruppe von 2 bis 30 Kohlenstoffatomen ist; und Index a einen Wert von 4 bis 10.000 aufweist.

3. Zusammensetzung nach Anspruch 1 oder 2, wobei das Ausgangsmaterial (B) das Polyalkylhydrogensiloxan die Einheitsformel (B-1) aufweist:
(R ^{M}₃SiO_{1/2})ᵣ(R^{M}₂HSiO_{1/2})ₛ(R^{M}₂SiO_{2/2})ₜ(R^{M}HSiO_{2/2})ᵤ, wobei jedes R^{M} eine unabhängig ausgewählte Alkylgruppe von 1 bis 30 Kohlenstoffatomen ist; Index r 0, 1 oder 2 ist; Index s 0, 1 oder 2 ist, mit der Maßgabe, dass eine Menge (r + s) = 2; Index t ≥ 0, Index u > 0, mit der Maßgabe, dass eine Menge (s + u) > 2, und eine Menge (r + s + t + u) 4 bis 500 ist.

4. Zusammensetzung nach einem der Ansprüche 1 bis 3, wobei das Ausgangsmaterial (C) der Hydrosilylierungsreaktionskatalysator, einen Platin-Organosiloxankomplex umfasst.

5. Zusammensetzung nach einem der Ansprüche 1 bis 4, wobei das Ausgangsmaterial (D-1), das Polyorganosilicatharz zu 4 Gew.-% bis 74 Gew.-%, bezogen auf kombinierte Gewichtungen von Ausgangsmaterialien (A) bis (G) vorhanden ist, und das Ausgangsmaterial (D-1) die Einheitsformel (D-1-1) umfasst:
(R^{M}₃SiO_{1/2})ₘ(R^{M}₂R^{M}SiO_{1/2})ₙ(SiO_{4/2})ₒ, wobei jedes R^{M} eine unabhängig ausgewählte Alkylgruppe von 1 bis 30 Kohlenstoffatomen ist; jedes R^{U} eine unabhängig ausgewählte einwertige aliphatisch ungesättigte Kohlenwasserstoffgruppe von 2 bis 30 Kohlenstoffatomen ist; und die Indices m, n und o Werte aufweisen, derart, dass m > 0, n ≥ 0, o > 1, mit der Maßgabe, dass eine Menge (m + n + o) einen Wert aufweist, der ausreicht, um das Polyorganosilicatharz mit einer zahlenmittleren Molekularmasse von 1.000 g/mol bis 30.000 g/mol bereitzustellen.

6. Zusammensetzung nach einem der Ansprüche 1 bis 5, wobei das Ausgangsmaterial (D-2), das verzweigte Polyorganosiloxanpolymer zu 1 Gew.-% bis 10 Gew.-%, bezogen auf kombinierte Gewichtungen von Ausgangsmaterialien (A) bis (G) vorhanden ist, und das Ausgangsmaterial (D-2) die Einheitsformel (D-2-1) umfasst: (R^{M}₃SiO_{1/2})_{b}(R^{M}₂R^{U}SiO_{1/2})_{c}(R^{M}₂SiO_{2/2})_{d}(SiO_{4/2})ₑ, wobei jedes R^{M} eine unabhängig ausgewählte Alkylgruppe von 1 bis 30 Kohlenstoffatomen ist; jedes R^{U} eine unabhängig ausgewählte einwertige aliphatisch ungesättigte Kohlenwasserstoffgruppe von 2 bis 30 Kohlenstoffatomen ist; und die Indices b, c, d und e die folgenden Werte b ≥ 0, c ≥ 0 aufweisen, eine Menge (b + c) ≥ 4, d 0 bis 995 und e ≥ 1 ist.

7. Zusammensetzung nach einem der Ansprüche 1 bis 6, wobei Ausgangsmaterial (E) das Poly(dialkyl/alkyl,fluoralkyl)siloxan, die Einheitsformel (E-1) aufweist:
(R^{M}₃SiO_{1/2})₂(R^{M}R^{F}SiO_{2/2})_{f}(R^{M}₂SiO_{2/2})_{g}, wobei jedes R^{M} eine unabhängig ausgewählte Alkylgruppe von 1 bis 30 Kohlenstoffatomen ist; jedes R^{F} eine unabhängig ausgewählte einwertige fluorierte Alkylgruppe von 1 bis 30 Kohlenstoffatomen ist; Index f > 0, Index g > 0, mit der Maßgabe, dass eine Menge (f + g) 100 bis 10.000 ist.

8. Zusammensetzung nach einem der Ansprüche 1 bis 7, wobei jedes R^{M} Methyl ist und jedes R^{U} unabhängig aus der Gruppe ausgewählt ist, bestehend aus Vinyl, Allyl und Hexenyl.

9. Zusammensetzung nach einem der Ansprüche 1 bis 8, wobei das Ausgangsmaterial (F) das Verankerungsadditiv aus der Gruppe ausgewählt ist, bestehend aus (F-1) Vinyltriacetoxysilan, (F-2) Glycidoxypropyltrimethoxysilan, (F-3) einer Kombination aus (F-1) und (F-2), und (F-4) einer Kombination aus (F-3) und einem Polydimethylsiloxan, das mit Hydroxylgruppen, Methoxygruppen terminiert ist, oder mit sowohl einer Hydroxygruppe als auch einer Methoxygruppe terminiert ist.

10. Zusammensetzung nach einem der Ansprüche 1 bis 9, wobei Ausgangsmaterial (G), der Hydrosilylierungsreaktionsinhibitor vorhanden ist, und ausgewählt ist aus der Gruppe bestehend aus 1-Ethinyl-1-cyclohexanol, Methylbutynol und Diallylmaleat.

11. Zusammensetzung nach einem der Ansprüche 1 bis 10, wobei das Ausgangsmaterial (H) das Lösungsmittel vorhanden ist, und ausgewählt ist aus der Gruppe bestehend aus Toluol, Xylol, Heptan, Ethylacetat und einer Kombination von zwei oder mehreren davon.

12. Siliconhaftklebstoff, der durch Härten der Zusammensetzung nach einem der vorstehenden Ansprüche hergestellt wird.

13. Schutzfolie, umfassend:
1) den Siliconhaftklebstoff nach Anspruch 12,
2) ein Substrat, das eine Oberfläche aufweist, wobei der Siliconhaftklebstoff auf die Oberfläche des Substrats beschichtet ist.

14. Verfahren zum Herstellen der Schutzfolie, umfassend:
optional 1) Behandeln einer Oberfläche eines Substrats,
2) Beschichten der Siliconhaftklebstoffzusammensetzung nach einem der Ansprüche 1 bis 11 auf die Oberfläche des Substrats,
optional 3) Entfernen von einigem des oder dem gesamten Lösungsmittel(s), wenn vorhanden, und
4) Härten der Haftklebstoffzusammensetzung.

15. Verwendung der Schutzfolie nach Anspruch 13 oder der Schutzfolie, die durch das Verfahren nach Anspruch 14 hergestellt wird, auf einer Anti-Fingerabdruck-Beschichtung für ein Anzeigeglas.

## Revendications

1. Composition d'adhésif sensible à la pression à base de silicone comprenant :
10 % en poids à 60 % en poids, en fonction des poids combinés de matériaux de départ (A) à (G), de (A) un polydialkylsiloxane se terminant par un groupe à insaturation aliphatique ;
0,1 % en poids à 5 % en poids, en fonction des poids combinés de matériaux de départ (A) à (G), de (B) un polyalkylhydrogénosiloxane ;
0,01 % en poids à 5 % en poids, en fonction des poids combinés de matériaux de départ (A) à (G), de (C) un catalyseur de réaction d'hydrosilylation ;
5 % en poids à 75 % en poids, en fonction des poids combinés de matériaux de départ (A) à (G), de (D) un siloxane choisi dans le groupe constitué de
(D-1) une résine polyorganosilicate,
(D-2) un polymère polyorganosiloxane ramifié, et
(D-3) une combinaison à la fois de (D-1) et de (D-2) ;
à condition que les matériaux de départ (A) et (D) soient présents en des quantités suffisantes pour fournir un rapport (D)/(A) ≥ 2/1 ;
≥ 0,65 % en poids à < 3 % en poids, en fonction des poids combinés de matériaux de départ (A) à (G), de (E) un poly(dialkyl/alkyl,fluoroalkyl)siloxane ;
0,1 % en poids à 5 % en poids, en fonction des poids combinés des matériaux de départ (A) à (G), de (F) un additif d'ancrage ;
0 % en poids à 5 % en poids, en fonction des poids combinés des matériaux de départ (A) à (G), de (G) un inhibiteur de réaction d'hydrosilylation ; et
0 % en poids à 60 % en poids, en fonction des poids combinés de tous les matériaux de départ dans la composition, de (H) un solvant.

2. Composition selon la revendication 1, où le matériau de départ (A), le polydialkylsiloxane se terminant par un groupe à insaturation aliphatique, a la formule unitaire (A-1) : (R^{M}₂R^{U}SiO_{1/2})₂(R^{M}₂SiO_{2/2})ₐ où chaque R^{M} est un groupe alkyle indépendamment choisi de 1 à 30 atomes de carbone ; chaque R^{U} est un groupe hydrocarboné monovalent à insaturation aliphatique indépendamment choisi de 2 à 30 atomes de carbone ; et l'indice a a une valeur de 4 à 10 000.

3. Composition selon la revendication 1 ou la revendication 2, où le matériau de départ (B), le polyalkylhydrogénosiloxane, a la formule unitaire (B-1) :
(R^{M}₃SiO_{1/2})ᵣ(R^{M}₂HSiO_{1/2})ₛ(R^{M}₂SiO_{2/2})ₜ(R^{M}HSiO_{2/2})ᵤ, où chaque R^{M} est un groupe alkyle indépendamment choisi de 1 à 30 atomes de carbone ; l'indice r vaut 0, 1 ou 2 ; l'indice s vaut 0, 1 ou 2, à condition qu'une quantité (r + s) = 2 ; l'indice t ≥ 0, l'indice u > 0, à condition qu'une quantité (s + u) > 2, et qu'une quantité (r + s + t +u) vaille de 4 à 500.

4. Composition selon l'une quelconque des revendications 1 à 3, où le matériau de départ (C), le catalyseur de réaction d'hydrosilylation, comprend un complexe platine-organosiloxane.

5. Composition selon l'une quelconque des revendications 1 à 4, où le matériau de départ (D-1), la résine polyorganosilicate, est présent à 4 % en poids jusqu'à 74 % en poids en fonction des poids combinés des matériaux de départ (A) à (G), et le matériau de départ (D-1) comprend la formule unitaire (D-1-1) :
(R^{M}₃SiO_{1/2})ₘ(R^{M}₂R^{M}SiO_{1/2})ₙ(SiO_{4/2})ₒ, où chaque R^{M} est un groupe alkyle indépendamment choisi de 1 à 30 atomes de carbone ; chaque R^{U} est un groupe hydrocarboné monovalent à insaturation aliphatique indépendamment choisi de 2 à 30 atomes de carbone ; et les indices m, n et o ont des valeurs de telle sorte que m > 0, n ≥ 0, o > 1, à condition qu'une quantité (m + n + o) ait une valeur suffisante pour fournir à la résine polyorganosilicate une masse moléculaire moyenne en nombre de 1000 g/mol à 30 000 g/mol.

6. Composition selon l'une quelconque des revendications 1 à 5, où le matériau de départ (D-2), le polymère polyorganosiloxane ramifié, est présent à 1 % en poids jusqu'à 10 % en poids, en fonction des poids combinés des matériaux de départ (A) à (G), et le matériau de départ (D-2) comprend la formule unitaire (D-2-1) : (R^{M}₃SiO_{1/2})_{b}(R^{M}₂R^{U}SiO_{1/2})_{c}(R^{M}₂SiO_{2/2})_{d}(SiO_{4/2})ₑ, où chaque R^{M} est un groupe alkyle indépendamment choisi de 1 à 30 atomes de carbone ; chaque R^{U} est un groupe hydrocarboné monovalent à insaturation aliphatique indépendamment choisi de 2 à 30 atomes de carbone ; et les indices b, c, d et e ont les valeurs suivantes b ≥ 0, c ≥ 0, une quantité (b + c) ≥ 4, d vaut de 0 à 995, et e ≥ 1.

7. Composition selon l'une quelconque des revendications 1 à 6, où le matériau de départ (E), le poly (dialkyl/alkyl,fluoroalkyl)siloxane, a la formule unitaire (E-1) :
(R^{M}₃SiO_{1/2})₂(R^{M}R^{F}SiO_{2/2})_{f}(R^{M}₂SiO_{2/2})_{g}, où chaque R^{M} est un groupe alkyle indépendamment choisi de 1 à 30 atomes de carbone ; chaque R^{F} est un groupe alkyle fluoré monovalent indépendamment choisi de 1 à 30 atomes de carbone ; l'indice f > 0, l'indice g > 0, à condition qu'une quantité (f + g) soit de 100 à 10 000.

8. Composition selon l'une quelconque des revendications 1 à 7, où chaque R^{M} est méthyle et chaque R^{U} est indépendamment choisi dans le groupe constitué de vinyle, allyle et hexényle.

9. Composition selon l'une quelconque des revendications 1 à 8, où le matériau de départ (F), l'additif d'ancrage, est choisi dans le groupe constitué de (F-1) vinyltriacétoxysilane, (F-2) glycidoxypropyltriméthoxysilane, (F-3) une combinaison de (F-1) et de (F-2), et (F-4) une combinaison de (F-3) et d'un polydiméthylsiloxane se terminant par des groupes hydroxyle, des groupes méthoxy, ou se terminant à la fois par un groupe hydroxy et par un groupe méthoxy.

10. Composition selon l'une quelconque des revendications 1 à 9, où le matériau de départ (G), l'inhibiteur de réaction d'hydrosilylation, est présent et est choisi dans le groupe constitué de 1-éthynyl-1-cyclohexanol, méthylbutynol, et maléate de diallyle.

11. Composition selon l'une quelconque des revendications 1 à 10, où le matériau de départ (H), le solvant, est présent et est choisi dans le groupe constitué de toluène, xylène, heptane, éthylacétate, et une combinaison de deux de ceux-ci ou plus.

12. Adhésif sensible à la pression à base de silicone préparé par durcissement de la composition selon l'une quelconque des revendications précédentes.

13. Film protecteur comprenant :
1) l'adhésif sensible à la pression à base de silicone selon la revendication 12,
2) un substrat ayant une surface, où l'adhésif sensible à la pression à base de silicone est revêtu sur la surface du substrat.

14. Procédé permettant de préparer un film protecteur comprenant :
facultativement 1) le traitement d'une surface d'un substrat,
2) le revêtement de la composition d'adhésif sensible à la pression à base de silicone selon l'une quelconque des revendications 1 à 11 sur la surface du substrat,
facultativement 3) l'élimination d'une partie ou de la totalité du solvant, lorsqu'il est présent, et
4) le durcissement de la composition d'adhésif sensible à la pression.

15. Utilisation du film protecteur selon la revendication 13 ou du film protecteur préparé par le procédé selon la revendication 14 sur un revêtement anti-traces de doigts pour un verre d'affichage.
